# EUROPÄISCHE PATENTSCHRIFT

(11) **EP 2 205 410 B1**
(45) Veröffentlichungstag und Bekanntmachung des Hinweises auf die Patenterteilung: **06.03.2013**
(21) Anmeldenummer: 08827859.3
(22) Anmeldetag: 25.08.2008
(51) Int. Cl.: B25J 15/02, B25B 5/08, B25B 5/06

(54) **GREIFVORRICHTUNG MIT VERSCHWENKBAREN SPANNBACKEN UND KOLBEN**
GRIPPING DEVICE WITH PIVOTING JAWS AND PISTON
DISPOSITIF DE PRÉHENSION AVEC DES MÂCHOIRES PIVOTANTES ET UN PISTON

(30) Priorität: 22.08.2007 DE 202007011757 U
(43) Veröffentlichungstag der Anmeldung: 14.07.2010
(73) Patentinhaber: Merkt, Guido, 73765 Neuhausen (DE)
(72) Erfinder: Merkt, Guido, 73765 Neuhausen (DE)
(74) Vertreter: Gittinger, Andreas
(86) Internationale Anmeldenummer: PCT/IB2008/002677
(87) Internationale Veröffentlichungsnummer: WO 2009/024865

(56) Entgegenhaltungen:
- WO-A-03/068456
- JP-A- 2002 337 080
- US-A1- 2006 174 760

## Beschreibung

Die Erfindung betrifft eine Greifvorrichtung mit mindestens einem Antriebskolben und mindestens zwei verschwenkbaren Spannbacken.

Die bisher aus dem Stand der Technik bekannten gattungsgemäßen Greifvorrichtungen benötigten einen relativ großen Einbauraum. Außerdem ist das Längenmaß dieser Greifvorrichtungen im Verhältnis zum Breitenmaß häufig unverhältnismäßig hoch. Sie sind somit in Konstruktionen mit geringem Platzangebot nicht einsetzbar.

Das Dokument JP-A1-2002337080 offenbart zwar eine platzsparrende Greifvorrichtung. Die Bewegungsgenauigkeit dieser Greifvorrichtung ist jedoch beschränkt, da die Rückbewegung des Antriebskolbens durch eine Feder gewährleistet wird.

Die Erfindung hat deshalb die Aufgabe, eine Greifvorrichtung der eingangs genannten Art dahingehend zu verbessern.

Die Erfindung löst die gestellte Aufgabe mit einer Greifvorrichtung nach Anspruch 1. Dadurch lässt sich die Greifvorrichtung deutlich kompakter und somit platzsparender bauen. Ihre Längen- und Breitenmaße sind somit ausgewogener zueinander. Sie ist deshalb für Konstruktionen einsetzbar, in welche sie bisher aus Platzgründen nicht einbaubar war.

Der mindestens eine Antriebskolben weist mindestens zwei Stifte auf und die mindestens zwei Spannbacken weisen mindestens eine auf ihrer Mantelfläche angeordnete Nut auf, so dass die Stifte in die auf den Spannbacken angeordnete Nute eingreifen, wodurch die Spannbacken bei der Betätigung des Antriebskolbens bewegt werden.

Die mindestens eine Nut kann spiralförmig angeordnet sein. Wenn der Antriebskolben axial bewegt wird, kann die Linearbewegung des Antriebskolbens durch den spiralförmigen Verlauf der Nut und die darin eingreifenden Stifte in eine Rotationsbewegung der Spannbacken umgewandelt werden, so dass diese eine Verschwenkbewegung ausführen können. Auf diese Weise kann schon ein geringer Hub des Antriebskolbens eine im Verhältnis zum Hub große Verschwenkbewegung der mindestens zwei Spannbacken bewirken. Aufgrund dieses günstigen Übersetzungsverhältnisses zwischen Hub und Verschwenkbewegung lässt sich die erfindungsgemäße Greifvorrichtung innerhalb kürzester Zeit öffnen und schließen. So sind Öffnungs- und Schließzeiten von nur wenigen hundertstel Sekunden möglich.

Damit die mindestens zwei Stifte möglichst zuverlässig in dem mindestens einen Antriebskolben gehalten werden, sind die Stifte in mindestens zwei Sackbohrungen angeordnet, wobei das geschlossene Ende jeder Bohrung möglichst nahe an die Mantelfläche des mindestens einen Antriebskolbens heranreicht.

Um ein Abbrechen der mindestens zwei Stifte zu vermeiden, können die Stifte weniger als 10 Millimeter über der Mantelfläche der mindestens zwei Spannbacken heraus stehen.

Zur Aufnahme eines Spannelements können die mindestens zwei Spannbacken jeweils ein Fortsatz aufweisen.

Zur schnellen und einfachen Montage kann das Spannelement am Fortsatz aufgesteckt und/oder aufgeschraubt werden.

Zwecks einer verschleißarmen Bewegung der mindestens zwei Spannbacken können die Spannbacken mittels Rillenkugellagern und/oder Gleitbuchsen und/oder in einem Gehäuse angeordneten Gleitlagern gelagert sein.

Um festzustellen, ob sich in der Greifvorrichtung ein Werkstück befindet, kann die Greifvorrichtung mit einem Werkstückerkennungssensor ausgerüstet sein.

Abhängig von den jeweiligen Anforderungen kann der Werkstückerkennungssensor ein Magnetschalter, ein Näherungsschalter, eine Kamera oder dergleichen sein.

Die Greifvorrichtung kann ein Gehäuse aufweisen, das aus drei hintereinander angeordneten Platten aufgebaut ist. Somit lässt sich das Gehäuse sehr einfach und kostengünstig realisieren.

Damit die Greifvorrichtung auch größere Gegenstände aufnehmen kann, können die mindestens zwei Spannbacken einen Öffnungswinkel von mindestens 180° einschließen.

Der Öffnungswinkel der mindestens zwei Spannbacken kann variiert werden, indem man den Hub des Antriebskolbens beispielsweise durch Verwendung eines kürzeren oder längeren Antriebskolbens verändert. Es ist jedoch auch möglich, den Antriebskolben durch Verwendung von Scheiben, die an den Antriebskolben angelegt werden können, zu verlängern. Je länger der Antriebskolben ist, umso kürzer ist sein Hub. Somit kann durch die Verwendung einer bestimmten Länge des Antriebskolbens der Öffnungswinkel der Spannbacken definiert werden.

Vorteilhafterweise kann der mindestens eine Antriebskolben hydraulisch oder pneumatisch betätigt werden.

Der Antriebskolben kann beidseitig hydraulisch oder pneumatisch beaufschlagbar sein. Dadurch kann der Antriebskolben kleiner dimensioniert werden und eine Feder, wie sie für einseitig beaufschlagbare Antriebskolben erforderlich ist, entfallen.

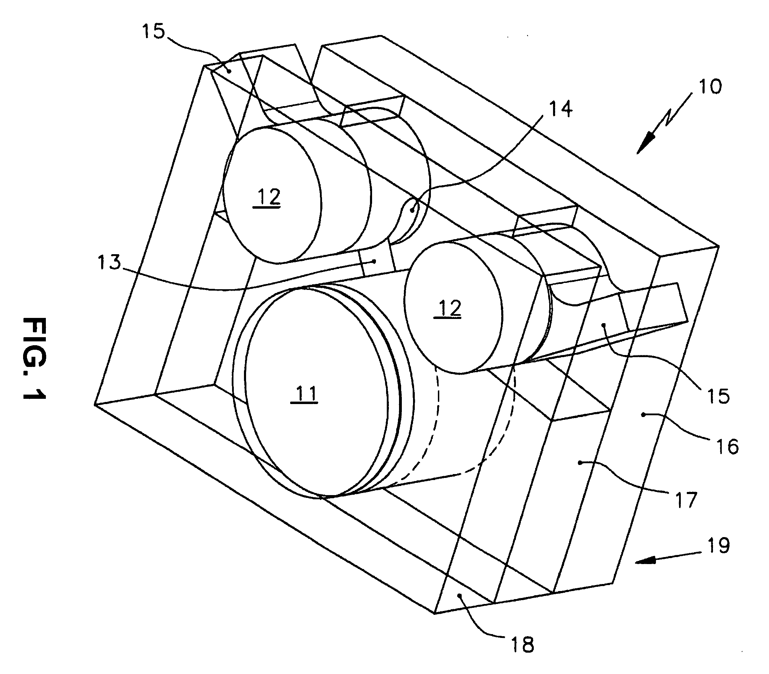

Nachfolgend wird ein Ausführungsbeispiel anhand der beiliegenden Zeichnung näher erläutert.

Die einzige Figur zeigt eine Greifvorrichtung 10 mit einem Antriebskolben 11 und zwei Spannbacken 12.

In dem Antriebskolben 11 sind zwei Stifte 13, von denen nur einer sichtbar ist, angeordnet, welche in Nuten 14 eingreifen.

Die Nut 14 ist spiralförmig ausgebildet. Somit wird die Axialbewegung des Antriebskolbens 11 in eine Verschwenkbewegung der Spannbacken 12 umgewandelt. Wenn sich der Antriebskolben 11 in die eine Richtung bewegt, werden die Spannbacken 12 aufeinander zu verschwenkt und die Greifvorrichtung 10 kann ein hier nicht näher gezeigtes Werkstück greifen. Wenn der Antriebskolben 11 in die entgegengesetzte Richtung bewegt wird, werden die Spannbacken 12 voneinander weg verschwenkt und die Greifvorrichtung 10 kann das Werkstück aufnehmen oder frei geben.

Die Stifte 13 stehen weniger als 10 mm über der Mantelfläche heraus. Dadurch wird verhindert, dass die Stifte abbrechen können.

Der Antriebskolben 11 weist zwei hier nicht näher dargestellte Sackbohrungen auf, in welchen die Stifte 12 angeordnet sind, wobei das geschlossene Ende der Bohrungen möglichst nah an die Mantelfläche des Antriebskolbens 11 heranreicht. Dadurch wird ein zuverlässiger Halt der Stifte in dem Antriebskolben gewährleistet.

An den Spannbacken 12 ist ein Fortsatz 15 vorgesehen, auf den ein hier nicht näher dargestelltes Spannelement aufgesteckt und/oder angeschraubt werden kann.

Die Greifvorrichtung 10 weist ein aus drei Platten 16, 17 und 18 aufgebautes Gehäuse 19 auf. Die Platten 17, 18 und 19 sind mit Bohrungen zur Aufnahme des Antriebskolbens 11 und der Spannbacken 12 ausgerüstet. Das Gehäuse 19 kann somit aus standardisierbaren Bauteilen schnell und kostengünstig montiert werden.

Der Antriebskolben 11 wird von beiden Seiten hydraulisch oder pneumatisch beaufschlagt.

Die Greifvorrichtung 10 kann von allen sechs Seiten her mit einem anderen hier nicht näher dargestellten Gegenstand verschraubt werden. So ist es möglich, die Greifvorrichtung von oben, von unten, von vorne, von hinten, von links und von rechts mit dem anderen Gegenstand zu verschrauben.

### BEZUGSZEICHENLISTE

- 10: Greifvorrichtung
- 11: Antriebskolben
- 12: Spannbacke
- 13: Stifte
- 14: Nut
- 15: Fortsatz
- 16: Platte
- 17: Platte
- 18: Platte
- 19: Gehäuse

## Patentansprüche

1. Greifvorrichtung (10) mit mindestens einem Antriebskolben (11) und mindestens zwei verschwenkbaren Spannbacken (12), wobei Schwenkachsen der Spannbacken (12) und eine Längsachse des Antriebskolbens (11) parallel zueinander angeordnet sind, **dadurch gekennzeichnet, dass** der mindestens eine Antriebskolben (11) mindestens zwei Stifte (13) und die mindestens zwei Spannbacken (12) mindestens eine auf ihrer Mantelfläche angeordnete Nut (14) aufweisen.

2. Greifvorrichtung (10) nach Anspruch 2, **dadurch gekennzeichnet, dass** die mindestens eine Nut (14) spiralförmig angeordnet ist.

3. Greifvorrichtung (10) nach Anspruch 2 oder 3, **dadurch gekennzeichnet, dass** die mindestens zwei Stifte (13) in mindestens zwei Sackbohrungen angeordnet sind, wobei das geschlossene Ende jeder Bohrung möglichst nahe an die Mantelfläche des mindestens einen Antriebskolbens (11) heranreicht.

4. Greifvorrichtung (10) nach Anspruch 4, **dadurch gekennzeichnet, dass** die mindestens zwei Stifte (13) weniger als 10 Millimeter über der Mantelfläche der mindestens zwei Spannbacken (12) heraus stehen.

5. Greifvorrichtung (10) nach einem der Ansprüche 1 bis 5, **dadurch gekennzeichnet, dass** die mindestens zwei Spannbacken (12) jeweils einen Fortsatz (15) zur Aufnahme eines Spannelements aufweisen.

6. Greifvorrichtung (10) nach Anspruch 6, **dadurch gekennzeichnet, dass** das Spannelement am Fortsatz (15) aufsteckbar und/oder verschraubbar ist.

7. Greifvorrichtung (10) nach einem der Ansprüche 1 bis 7, **dadurch gekennzeichnet, dass** die mindestens zwei Spannbacken (12) mittels Rillenkugellagern und/oder Gleitbuchsen und/oder in einem Gehäuse (19) angeordneten Gleitlagern gelagert sind.

8. Greifvorrichtung (10) nach einem der Ansprüche 1 bis 8, **dadurch gekennzeichnet, dass** Sie einen Werkstückerkennungssensor aufweist.

9. Greifvorrichtung (10) nach Anspruch 9, **dadurch gekennzeichnet, dass** der Werkstückerkennungssensor ein Magnetschalter, ein Näherungsschalter, eine Kamera oder dergleichen ist.

10. Greifvorrichtung (10) nach einem der Ansprüche 1 bis 10, **dadurch gekennzeichnet, dass** sie mit dem drei hintereinander angeordnete Platten (16, 17, 18) aufweisenden Gehäuse (19) versehen ist.

11. Greifvorrichtung (10) nach einem der Ansprüche 1 bis 11, **dadurch gekennzeichnet, dass** die mindestens zwei Spannbacken (12) einen Öffnungswinkel von mindestens 180° einschließen.

12. Greifvorrichtung (10) nach einem der Ansprüche 1 bis 12, **dadurch gekennzeichnet, dass** der mindestens eine Antriebskolben (11) hydraulisch oder pneumatisch betätigbar ist.

13. Greifvorrichtung (10) nach einem der Ansprüche 1 bis 13, **dadurch gekennzeichnet, dass** der Antriebskolben (11) doppelt wirkend ist.

## Claims

1. A gripping device (10) having at least one driving piston (11) and at least two pivotable clamping jaws (12), wherein pivot axes of the clamping jaws (12) and a longitudinal axis of the driving piston (11) are arranged parallel to one another, **characterized in that** the at least one driving piston (11) comprises at least two pins (13) and the at least two clamping jaws (12) at least one groove (14) arranged on their lateral surface.

2. The gripping device (10) according to Claim 1, **characterized in that** the at least one groove (14) is arranged spiral-shaped.

3. The gripping device (10) according to Claim 1 or 2, **characterized in that** the at least two pins (13) are arranged in at least two blind bores, wherein the closed end of each bore preferably reaches up closely to the lateral surface of the at least one driving piston (11).

4. The gripping device (10) according to Claim 3, **characterized in that** the at least two pins (13) protrude fewer than 10 mm over the lateral surface of the at least two clamping jaws (12).

5. The gripping device (10) according to any one of the Claims 1 to 4, **characterized in that** the at least two clamping jaws (12) each have a continuation (15) for receiving a clamping element.

6. The gripping device (10) according to Claim 5, **characterized in that** the clamping element can be fitted and/or screwed to the continuation (15).

7. The gripping device (10) according to any one of the Claims 1 to 6, **characterized in that** the at least two clamping jaws (12) are mounted by means of grooved ball bearings and/or slide bushes and/or slide bearings arranged in a housing (19).

8. The gripping device (10) according to any one of the Claims 1 to 7, **characterized in that** it comprises a work piece detection sensor.

9. The gripping device (10) according to Claim 8, **characterized in that** the work piece detection sensor is a magnetic switch, a proximity switch, a camera or the like.

10. The gripping device (10) according to any one of the Claims 1 to 9, **characterized in that** it is provided with the housing (19) comprising three plates (16, 17, 18) arranged one after the other.

11. The gripping device (10) according to any one of the Claims 1 to 10, **characterized in that** the at least two clamping jaws (12) enclose an opening angle of at least 180°.

12. The gripping device (10) according to any one of the Claims 1 to 11, **characterized in that** the at least one driving piston (11) can be actuated hydraulically or pneumatically.

13. The gripping device (10) according to any one of the Claims 1 to 12, **characterized in that** the driving piston (11) is double-acting.

## Revendications

1. Dispositif de préhension (10), comportant au moins un piston d'entraînement (11) et au moins deux mâchoires de serrage pivotables (12), dans lequel les axes de pivotement des mâchoires de serrage (12) et un axe longitudinal du piston d'entraînement (11) sont disposés parallèlement les uns par rapport aux autres, **caractérisé en ce que** l'au moins un piston d'entraînement (11) présente au moins deux tiges (13) et les au moins deux mâchoires de serrage (12) au moins une rainure (14) pratiquée sur sa surface d'enveloppe.

2. Dispositif de préhension (10) selon la revendication 1, **caractérisé en ce que** l'au moins une rainure (14) est pratiquée en forme spiralée.

3. Dispositif de préhension (10) selon la revendication 1 ou 2, **caractérisé en ce que** les au moins deux tiges (13) sont disposées dans au moins deux alésages borgnes, l'extrémité fermée de chaque alésage s'approchant autant que possible de la surface d'enveloppe de l'au moins un piston d'entraînement (11).

4. Dispositif de préhension (10) selon la revendication 3, **caractérisé en ce que** les au moins deux tiges (13) dépassent de moins de 10 millimètres de la surface d'enveloppe des au moins deux mâchoires de serrage (12).

5. Dispositif de préhension (10) selon une des revendications 1 à 4, **caractérisé en ce que** les au moins deux mâchoires de serrage (12) présentent respectivement un prolongement (15) destiné à recevoir un élément de serrage.

6. Dispositif de préhension (10) selon la revendication 5, **caractérisé en ce que** l'élément de serrage peut être fiché et/ou vissé sur le prolongement (15).

7. Dispositif de préhension (10) selon une des revendications 1 à 6, **caractérisé en ce que** les au moins deux mâchoires de serrage (12) s'appuient par des roulements à billes rainurés et/ou des douilles de glissement et/ou dans des paliers à glissement disposés dans un boîtier (19).

8. Dispositif de préhension (10) selon une des revendications 1 à 7, **caractérisé en ce qu'**il présente un capteur de détection de pièce.

9. Dispositif de préhension (10) selon la revendication 8, **caractérisé en ce que** le capteur de détection de pièce est un commutateur magnétique, un détecteur de proximité, une caméra ou similaire.

10. Dispositif de préhension (10) selon une des revendications 1 à 9, **caractérisé en ce qu'**il est pourvu du boîtier (19) présentant trois plaques (16, 17, 18) disposées les unes derrière les autres.

11. Dispositif de préhension (10) selon une des revendications 1 à 10, **caractérisé en ce que** les au moins deux mâchoires de serrage (12) circonscrivent un angle d'ouverture d'au moins 180°.

12. Dispositif de préhension (10) selon une des revendications 1 à 11, **caractérisé en ce que** l'au moins un piston d'entraînement (11) est actionnable par système hydraulique ou pneumatique.

13. Dispositif de préhension (10) selon une des revendications 1 à 12, **caractérisé en ce que** le piston d'entraînement (11) a une double action.
